# EUROPEAN PATENT APPLICATION

(11) **EP 4 841 388 A1**
(43) Date of publication of application: **18.11.2026**
(21) Application number: 26163294.7
(22) Date of filing: 09.03.2026
(51) Int. Cl.: G06F 1/16, H04M 1/02

(54) **ELECTRONIC DEVICE**

(30) Priority: 12.05.2025 CN 202510608238
(71) Applicant: Beijing Xiaomi Mobile Software Co., Ltd., Beijing 100085 (CN)
(72) Inventor: HE, Cong, Beijing, 100085 (CN)
(74) Representative: Dehns Germany Partnerschaft mbB

(57) **Abstract**

The present disclosure provides an electronic device including a flexible circuit board (11), a hinge module (14), a first middle frame (12) and a second middle frame (13) respectively connected to opposite sides of the hinge module (14), and the hinge module (14), the first middle frame (12), and the second middle frame (13) cooperate to enable the electronic device to be folded or unfolded; the flexible circuit board has a shaft-passing portion (111) passing through the hinge module (14), which includes a length compensation portion (1111) and a first shaft-passing sub-portion (1112) and a second shaft-passing sub-portion (1113) located on both sides of the length compensation portion; the hinge module (14) includes a storage portion (141) configured to accommodate the length compensation portion (1111) and a motion control portion (142) configured to control the extension and retraction of the length compensation portion(1111) between the folded and unfolded states.

## Description

### TECHNICAL FIELD

The present disclosure relates to a technical field of an electronic device, and more particularly, to an electronic device.

### BACKGROUND

In order to meet the demand of users for a miniaturized electronic device, a foldable electronic device has emerged. The foldable device may switch between a folded state and an unfolded state, such that the foldable device has larger screens when in use and a smaller volume when being carried.

### SUMMARY

In view of the foregoing, the present disclosure provides an electronic device, which may prevent a screen from being pushed up by a flexible circuit board, and ensure a good appearance of the screen.

The electronic device of the present disclosure includes a flexible circuit board, a first middle frame, a second middle frame, and a hinge module; the first middle frame and the second middle frame are respectively connected to two opposite sides of the hinge module, and the hinge module, the first middle frame, and the second middle frame are cooperatively movable to enable the electronic device to be folded or unfolded; the flexible circuit board is provided with a shaft-passing portion passing through the hinge module between the first middle frame and the second middle frame, the shaft-passing portion includes a length compensation portion, a first shaft-passing sub-portion and a second shaft-passing sub-portion, and the first shaft-passing sub-portion and a second shaft-passing sub-portion are located on two sides of the length compensation portion; the hinge module includes a storage portion and a motion control portion, the storage portion being configured to accommodate the length compensation portion of the shaft-passing portion, and the motion control portion being configured to control extension and retraction of the length compensation portion when the electronic device switches between a folded state and an unfolded state, such that length changes of the first shaft-passing sub-portion and the second shaft-passing sub-portion correspond to each other.

The electronic device provided by the embodiments of the present disclosure may achieve folding or unfolding through the coordinated movement of the hinge module, the first middle frame, and the second middle frame, thereby realizing a foldable function. The flexible circuit board is provided with a shaft-passing portion that passes through the hinge module, so as to connect the parts of the circuit board located on the first middle frame side and the second middle frame side, thus achieving an integrated circuit board. The shaft-passing portion includes a length compensation portion, the first and second shaft-passing sub-portions located on both sides of the length compensation portion. The length compensation portion may be stored in the storage portion of the hinge module, ensuring that another component, such as the screen, is not pressed by the flexible circuit board when the electronic device is in the unfolded state. The hinge module also includes a motion control portion, which may control the extension and retraction of the length compensation portion such that the lengths of the first and second shaft-passing sub-portions are compensated during the folding process, thereby ensuring that the shaft-passing portion may more stably connect the parts of the circuit board of the first and second middle frames. With the help of the motion control portion, the length changes of the first and second shaft-passing sub-portions may correspond to each other, preventing excessive length on a certain side and thus avoiding the accumulation of too much circuit board on a certain side when the device is restored to the unfolded state, which also prevents the screen from being pushed up, while avoiding the scenario where a relatively short length on a certain side causes excessive pulling and breaking of the circuit board.

Optionally, the motion control portion includes a first motion control assembly and a second motion control assembly located on both sides of the storage portion; the first motion control assembly is configured to control the extension and retraction of the length compensation portion to change the length of the first shaft-passing sub-portion; the second motion control assembly is configured to control the extension and retraction of the length compensation portion to change the length of the second shaft-passing sub-portion. In this embodiment, the two motion control assemblies located on both sides of the storage portion are used to respectively regulate the length changes of the first and second shaft-passing sub-portions, so as to ensure the correspondence of the length changes of the first and second shaft-passing sub-portions, thereby more effectively preventing the screen from being pushed up or the circuit board from being torn.

Optionally, the first motion control assembly and the second motion control assembly are symmetrically arranged relative to the storage portion. This further balances the adjustment effects of the two motion control assemblies, thereby improving the correspondence of the length changes of the first and second shaft-passing sub-portions.

Optionally, the first motion control assembly and the second motion control assembly respectively support the shaft-passing portion in a rolling manner. In this embodiment, the shaft-passing portion is rollingly supported, such that the length compensation portion of the shaft-passing portion does not get damaged due to wear during relative extension and retraction, which ensures the functionality of the flexible circuit board.

Optionally, the first motion control assembly includes a first rolling support member, and the second motion control assembly includes a second rolling support member, where the first rolling support member and the second rolling support member respectively support the shaft-passing portion in a rolling manner. In this embodiment, the rolling support members are used to achieve the rolling support for the shaft-passing portion. Thus, during the relative extension and retraction of the length compensation portion of the shaft-passing portion, there is mainly rolling friction between the rolling support member and the shaft-passing portion, further, the rolling support members do not obstruct the extension and retraction of the length compensation portion, and the rolling support members may ensure that the speed of extension and retraction is slow and the amount of extension and retraction towards both sides is relatively balanced, and thus, the shaft-passing portion does not cause the screen to be pushed up due to excessive accumulation on one side or be torn due to being suddenly pulled on one side.

Optionally, the electronic device includes a screen, where the screen includes a foldable portion; the hinge module includes a first floating plate structure and a second floating plate structure, where the first floating plate structure and the second floating plate structure are configured to jointly support the foldable portion; the first rolling support member and the second rolling support member are respectively mounted on the first floating plate structure and the second floating plate structure. In this embodiment, by mounting the first rolling support member and the second rolling support member on the first floating plate structure and the second floating plate structure, it is advantageous for the first rolling support member and the second rolling support member to adaptively change their own positions during the folding or unfolding process of the electronic device, thereby constantly maintaining rolling contract with the first shaft-passing sub-portion and the second shaft-passing sub-portion of the shaft-passing portion, and ensuring effective length control of the first shaft-passing sub-portion and the second shaft-passing sub-portion.

Optionally, the first floating plate structure and the second floating plate structure respectively have a first mounting position and a second mounting position, where the first rolling support member and the second rolling support member are respectively mounted on the first floating plate structure and the second floating plate structure by means of the first mounting position and the second mounting position. By respectively forming the mounting positions on the first floating plate structure and the second floating plate structure to mount the first rolling support member and the second rolling support member, it is advantageous to fully utilize an internal space of the hinge module, reduce a volume of the hinge module, and thus facilitate the realization of the invisibility of the hinge module.

Optionally, one or both of the first rolling support member and the second rolling support member are a pulley structure or a roller structure. By using the pulley or roller structure to implement the rolling support member, a simple structure with a low cost may achieve a reliable motion control effect.

Optionally, the first motion control assembly further includes a third rolling support member, and the second motion control assembly further includes a fourth rolling support member; the third rolling support member and the fourth rolling support member respectively support the shaft-passing portion in a rolling manner; the third rolling support member and the fourth rolling support member are located on a first side of the shaft-passing portion, and the first rolling support member and the second rolling support member are located on a second side of the shaft-passing portion, where the first side and the second side are the two opposite sides of the shaft-passing portion. In this embodiment, the rolling support members are arranged on both sides of the shaft-passing portion, which may reduce a probability of the shaft-passing portion deviating from a set motion direction during operation, ensuring better motion control of the shaft-passing portion. The first shaft-passing sub-portion and the second shaft-passing sub-portion are less likely to accumulate within a short period of time. Through the rolling support of the rolling support members on both sides, the motion deformation process of the shaft-passing portion is smoother, with more balanced changes on both sides, so as to reduce the likelihood of breakage.

Optionally, the third rolling support member and the fourth rolling support member are respectively arranged in a staggered manner with the first rolling support member and the second rolling support member. In this way, first, it avoids the rolling support members being arranged on both sides of a single position of the shaft-passing portion, thereby preventing the electronic device from experiencing difficulty in folding or unfolding due to a slow motion speed of the shaft-passing portion; second, it avoids both sides of the shaft-passing portion simultaneously bearing the rolling friction, thereby reducing the probability of wear on the shaft-passing portion; third, the staggered arrangement design ensures that the first shaft-passing sub-portion and the second shaft-passing sub-portion maintain a generally extended state, making it less likely for accumulation to occur and avoiding breakage caused by excessive folding.

Optionally, the hinge module includes a hinge cover and a hinge shaft, and the hinge cover encloses the hinge shaft; the third rolling support member and the fourth rolling support member are respectively mounted on a first side edge and a second side edge of the hinge cover, where the first side edge is the side edge of the hinge cover closer to the first middle frame, and the second side edge is the side edge of the hinge cover closer to the second middle frame. In this embodiment, the third rolling support member and the fourth rolling support member are respectively mounted on the first side edge and the second side edge of the hinge cover, which effectively avoids wear caused by relative friction between the shaft-passing portion and the hinge cover, thus improving the service life of the flexible circuit board.

Optionally, one or both of the third rolling support member and the fourth rolling support member are a roller structure or a pulley structure. By using the roller or pulley to implement the third rolling support member and the fourth rolling support member, reliable motion control may be achieved with a simple structure and lower cost.

Optionally, the hinge module includes a hinge cover and a hinge shaft, and the hinge cover encloses the hinge shaft; the electronic device further includes a screen; the storage portion is formed on the side of the hinge cover closer to the screen. In this embodiment, the storage portion is formed on the side of the hinge cover closer to the screen, to store the length compensation portion, so as to ensure that the compensation amounts of the length compensation portion for the first shaft-passing sub-portion and the second shaft-passing sub-portion to be more balanced, and also facilitate the smoother return of the remaining length of the shaft-passing sub-portions on both sides to the storage portion after the electronic device switches back to the unfolded state, preventing accumulation outside the storage portion.

Optionally, a side surface of the hinge cover close to the screen is an arcuate surface symmetrical with respect to a folding line of the electronic device, where the arcuate surface is recessed in the direction away from the screen. The folding line of the electronic device refers to the line along which the screen remains immovable during the folding process of the electronic device, and the hinge cover forms the storage portion through the arcuate surface. In this embodiment, by using the arcuate surface to form the storage portion, it is advantageous to increase the storage capacity of the storage portion, ensuring that the design margin of the shaft-passing portion does not need to be excessively folded even in the stored state. The arcuate surface is set to be symmetrical with respect to the folding line of the electronic device, which helps ensure that the remaining lengths of the shaft-passing sub-portions on both sides may slide into the storage portion at a more even speed, and is less likely to cause accumulation on a single side.

Optionally, the motion control portion further includes a floating support assembly, which is configured to floatably support the shaft-passing portion when the electronic device switches between the folded and unfolded states. In this embodiment, by setting the floating support assembly, the shaft-passing portion is floatably supported, providing a floating support force to the shaft-passing portion during the movement of the shaft-passing portion. In this way, the shaft-passing portion may remain in an extended state and is not easily folded, thereby effectively avoiding excessive redundancy; moreover, the length of the shaft-passing portion may always ensure stable connection with the circuit board on both sides of the middle frame, avoiding too short a length, thus effectively preventing insufficient redundancy.

Optionally, the hinge module further includes a middle support assembly, which is located on a side of the length compensation portion of the shaft-passing portion that is away from the hinge cover. The middle support assembly supports the foldable portion of the screen; the floating support assembly is mounted on the middle support assembly. The floating support assembly is mounted on the middle support assembly, which helps avoid the folding of the length compensation portion of the shaft-passing portion. Additionally, during the folding process of the electronic device, the floating support assembly may timely floatably support the length compensation portion to prevent the length compensation portion from extending or retracting too quickly, ensuring that the compensation amounts of the length compensation portion for the shaft-passing sub-portions on both sides are more balanced.

Optionally, the middle support assembly includes a first middle support member and a second middle support member, where the first middle support member and the second middle support member move towards or away from each other when the electronic device switches between the folded and unfolded states; the floating support assembly includes a first floating support structure and a second floating support structure, where the first floating support structure and the second floating support structure are respectively mounted on the first middle support member and the second middle support member. In this embodiment, the two middle support members may accordingly move towards or away from each other in accordance with the folding or unfolding of the electronic device, to respectively support the opposite folding parts of the foldable portion of the screen. The floating support structures are provided on the two middle support members, which further helps ensure the compensation amounts of the length compensation portion for the shaft-passing sub-portions on both sides to be more balanced.

Optionally, the first floating support structure and the second floating support structure are both elastic telescopic structures. Thus, it may ensure that the floating support structures provide effectively support to the length compensation portion when the redundancy of the shaft-passing portion is relatively large, and ensure timely retraction of the floating support structures when the redundancy of the shaft-passing portion is relatively insufficient, avoiding excessive pressure on the shaft-passing portion. Furthermore, the elastic telescopic structure may switch between the extended and retracted states with high frequency and for long periods, which improves the service life of the electronic device.

Optionally, the first floating support structure includes a first elastic member and a first telescopic member, where the first elastic member is supported between the first telescopic member and the first middle support member, and the first telescopic member is biased by the first elastic member to elastically support the shaft-passing portion during the folding process of the electronic device; and/or, the second floating support structure includes a second elastic member and a second telescopic member, where the second elastic member is supported between the second telescopic member and the second middle support member, and the second telescopic member is biased by the second elastic member to elastically support the shaft-passing portion during the folding process of the electronic device. This implementation ensures the reliability of the floating support with a simple structure.

Optionally, one or more of the first elastic member and the second elastic member include a spring. Using springs to implement the elastic member is cost-effective and has high durability.

Optionally, the first middle frame and the second middle frame respectively are defined with a first perforation and a second perforation; the flexible circuit board is provided with a first perforation portion and a second perforation portion located on two sides of the shaft-passing portion, where the first perforation portion is at least partially fixedly mounted in the first perforation, and the second perforation portion is at least partially fixedly mounted in the second perforation. In this embodiment, the first perforation portion and the second perforation portion are fixedly mounted in the first perforation and the second perforation respectively, so as to ensure the redundancy set for the flexible circuit board to be always maintained between the two middle frames, thereby ensuring that the actual length of the shaft-passing portion is the same as the design length, and that the design redundancy of the shaft-passing portion is equal to the actual redundancy of the shaft-passing portion, and further ensuring a longer bending service life for the electronic device.

Optionally, the electronic device further includes a first positioning support and a second positioning support, where the first positioning support and the second positioning support are respectively filled in the first perforation and the second perforation to fix the first perforation portion and the second perforation portion respectively. In this embodiment, the first positioning support may help improve the installation firmness of the first perforation portion relative to the first middle frame, and the second positioning support may help improve the installation firmness of the second perforation portion relative to the second middle frame.

Optionally, one or both of the first positioning support and the second positioning support are a matching structure of a metal and a non-metal structures, where the metal structure is embedded in the non-metal structure. Based on this arrangement, the metal structure may be used to ensure that the overall strength of the positioning support is relatively high, while the non-metal structure may be used to ensure the adaptability of the positioning support to the shape of the perforation location.

Optionally, the electronic device further includes a first positioning metal member and a second positioning metal member; the first positioning metal member and the second positioning metal member are respectively fixedly connected to the first perforation portion and the second perforation portion, and are respectively positioned and mounted on the first middle frame and the second middle frame. In this embodiment, the first positioning metal member and the second positioning metal member are configured for the first perforation portion and the second perforation portion, respectively. On one hand, the fit between the positioning metal members and the perforation portions may improve the overall structural strength of the perforation portions, reducing the breaking risk of the perforation portion due to pulling. On the other hand, the positioning metal members, together with the perforation portions, may be positioned and mounted together, improving the positioning and mounting accuracy of the perforation portions.

Optionally, the first middle frame is defined with a first mounting groove, the first positioning metal member is provided with a first protrusion portion, and the first protrusion portion is located in the first mounting groove; and/or, the second middle frame is defined with a second mounting groove, the second positioning metal member is provided with a second protrusion portion, and the second protrusion portion is located in the second mounting groove.

Optionally, the electronic device further includes a plurality of sealing layers, where the plurality of sealing layers includes: a sealing layer filling a gap between the first positioning metal member and a wall surface of the first perforation, a sealing layer filling a gap between the second positioning metal member and a wall surface of the second perforation, a sealing layer filling a gap between the first perforation portion and the first positioning support, a sealing layer filling a gap between the second perforation portion and the second positioning support, a sealing layer filling the gap between the first positioning support and a wall surface of the first perforation, and/or, a sealing layer filling a gap between the second positioning support and a wall surface of the second perforation. Through one or more of these sealing layers, the sealing at the positions of the first perforation and the second perforation may be ensured, thereby preventing water or moisture from entering the hinge module through the perforations, and further ensuring the service life of the hinge module and meeting the IPX8 waterproof requirement for the electronic device.

Optionally, the electronic device further includes one or a plurality of elastic support layers, where the one or the plurality of elastic support layers include an elastic support layer filled between the first positioning support and the first perforation portion, and/or an elastic support layer filled between the second positioning support and the second perforation portion. By providing the above elastic layers, the elastic layer may press against the first perforation portion or the second perforation portion to prevent the first perforation portion and the second perforation portion from shifting. The elastic layer may be elastically compressed, thus adapting to the shape of the circuit board under different assembly conditions, achieving an elastic pressing surface that is consistent with the shape of the circuit board, and ensuring the proper fixation of the circuit board.

### BRIEF DESCRIPTION OF THE DRAWINGS

In order to more clearly illustrate the technical solutions in the embodiments of the present disclosure, a brief introduction to the drawings used in the description of the embodiments will be given below. It is obvious that the drawings described below are merely some of the embodiments of the present disclosure, and those skilled in the art, without creative labor, may also obtain other drawings based on these drawings.
FIG. 1 is a partial structural diagram of an electronic device in an unfolded state provided by an embodiment of the present disclosure;
FIG. 2 is a partial structural diagram of an electronic device in a folded state provided by an embodiment of the present disclosure;
FIG. 3 is a partial structural diagram of an electronic device in a folded state from another perspective provided by an embodiment of the present disclosure;
FIG. 4 is a cross-sectional view of an electronic device shown in FIG. 1;
FIG. 5 is a partially enlarged view of an electronic device shown in FIG. 4;
FIG. 6 is a structural diagram of an electronic device shown in FIG. 5 from another perspective;
FIG. 7 is an enlarged schematic view of a structure shown in FIG. 6 at frame A;
FIG. 8 is an enlarged schematic view of a structure shown in FIG. 6 at frame B;
FIG. 9 is an enlarged schematic view of a structure shown in FIG. 6 at a floating support assembly;
FIG. 10 is a cross-sectional view of an electronic device from another perspective provided by an embodiment of the present disclosure;
FIG. 11 is a partial cross-sectional view of an electronic device in a folded state provided by the embodiment of the present disclosure;
FIG. 12 is a partial structural exploded view of an electronic device provided by an embodiment of the present disclosure;
FIG. 13 is another partial structural exploded view of an electronic device provided by an embodiment of the present disclosure.

### Reference numerals:

11 - flexible circuit board; 111 - shaft-passing portion; 1111 - length compensation portion; 1112 - first shaft-passing sub-portion; 1113 - second shaft-passing sub-portion; 112 - first perforation portion; 113 - second perforation portion; 114 - circuit board protrusion portion;
12 - first middle frame; 121 - first perforation; 122 - first mounting groove;
13 - second middle frame; 131 - second perforation; 132 - second mounting groove;
14 - hinge module;
141 - storage portion;
142 - motion control portion; 1421 - first motion control assembly; 14211 - first rolling support member; 14212 - third rolling support member; 1422 - second motion control assembly; 14221 - second rolling support member; 14222 - fourth rolling support member; 1423 - floating support assembly; 14231 - first floating support structure; 142311 - first elastic member; 142312 - first telescopic member; 14232 - second floating support structure; 142321 - second elastic member; 142322 - second telescopic member;
143 - first floating plate structure; 1431 - first mounting position;
144 - second floating plate structure; 1441 - second mounting position;
145 - hinge cover;
146 - middle support assembly; 1461 - first middle support member; 1462 - second middle support member;
147 - hinge shaft;
15 - screen; 151 - foldable portion;
16 - first positioning support;
17 - second positioning support; 1671 - metal structure; 1672 - non-metal structure;
18 - first positioning metal member; 181 - first protrusion portion;
19 - second positioning metal member; 191 - second protrusion portion;
20 - sealing layer;
21 - elastic support layer.

The above drawings illustrate specific embodiments of the present disclosure, which will be described in more detail below. These drawings and descriptions are not intended to limit the scope of the concepts of the present disclosure in any way, but rather to illustrate the concepts of the present disclosure to those skilled in the art by referring to specific embodiments.

### DETAILED DESCRIPTION

The following will describe the technical solutions of the embodiments of the present disclosure in a clear and complete manner with reference to the accompanying drawings. It is obvious that the described embodiments are part of the embodiments of the present disclosure, not all of the embodiments. All other embodiments derived by those skilled in the art based on the embodiments in the present disclosure, without creative labor, fall within the scope of protection of the present disclosure.

The directional terms involved in the embodiments of the present disclosure, such as "up", "down", "side", etc., are generally based on the relative orientation between structures as shown in the figures or as commonly arranged when the electronic device is placed. These directional terms are used merely to describe the relationship between structures more clearly and are not meant to describe absolute orientations. When the electronic device is placed in different postures, the orientation may change. For example, "up" and "down" may be interchangeable.

Unless otherwise defined, all technical terms used in the embodiments of the present disclosure have the same meaning as understood by a person skilled in the art.

To make the technical solutions and advantages of the present disclosure clearer, the following will provide a more detailed description of the embodiments of the present disclosure, in conjunction with the accompanying drawings.

For a foldable electronic device, since it may switch between two states, i.e., a folded state and an unfolded state, in order to achieve an integrated circuit board, the circuit board should at least include a flexible portion located in the middle and passing through the hinge module, as well as the parts located on the two sides of the middle frame. However, the part of the circuit board passing through the hinge module also folds or unfolds with the folding part of the electronic device, the length required for this part of the circuit board differs between the folded and unfolded states, with the length required in the folded state being greater than that in the unfolded state. Therefore, to ensure that the part of the circuit board passing through the hinge module remains stably connected to the parts of the circuit board on the two sides of the middle frame in both the folded and unfolded states, it is necessary to design a redundancy for the length of the part of the circuit board passing through the hinge module.

In some embodiments, the redundant part of the circuit board passing through the hinge module is stored on both sides of the hinge cover of the hinge module. After multiple folds, the accumulated amount of this part of the circuit board on a certain side of the hinge cover may become excessive, thus pressing against the screen of the electronic device, causing poor display, an uneven appearance of the screen, or even screen failure.

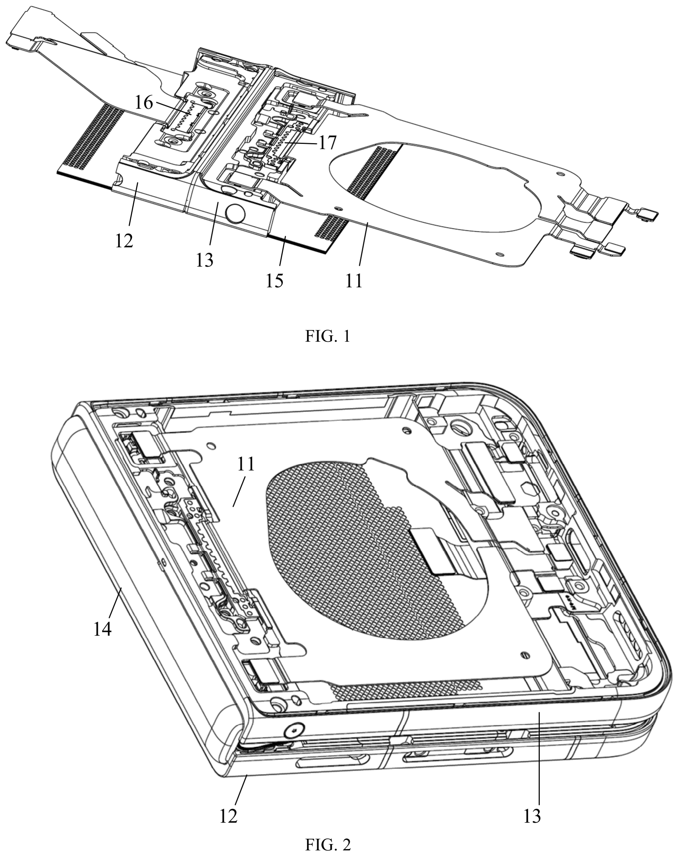

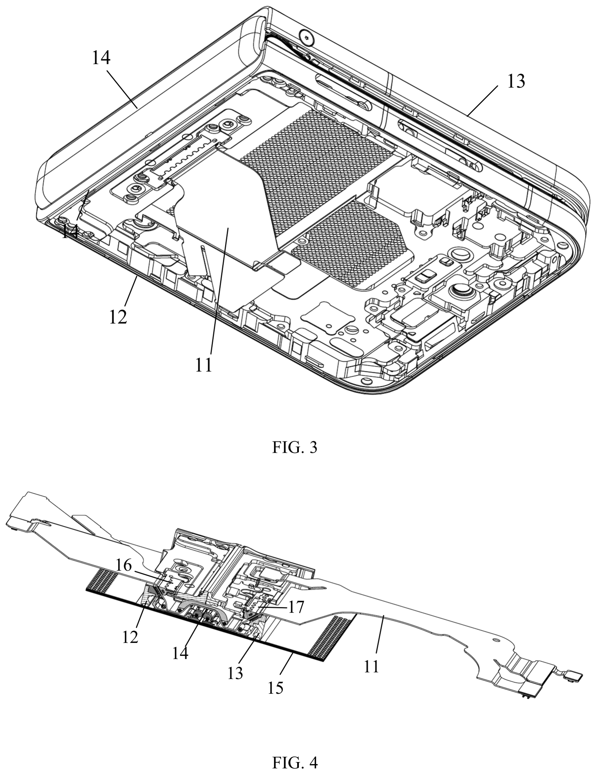

With reference to FIGS. 1-13, the embodiments of the present disclosure provide an electronic device to address the above-mentioned issues of poor display, uneven screen appearance, and even screen failure.

To highlight the structural improvements of the present disclosure, some structures of the electronic device, such as the battery and at least part of the middle frame, are omitted in the drawings. The implementation of these structures may refer to the related art, and the present disclosure will not describe them in detail.

With reference to FIGS. 1-6, the electronic device in the embodiment of the present disclosure includes a flexible circuit board 11, a first middle frame 12, a second middle frame 13, and a hinge module 14;

The first middle frame 12 and the second middle frame 13 are respectively connected to two opposite sides of the hinge module 14, and the hinge module 14, the first middle frame 12, and the second middle frame 13 are cooperatively movable to enable the electronic device to fold or unfold;

The flexible circuit board 11 is provided with a shaft-passing portion 111 passing through the hinge module 14 between the first middle frame 12 and the second middle frame 13. The shaft-passing portion 111 includes a length compensation portion 1111, a first shaft-passing sub-portion 1112 and a second shaft-passing sub-portion 1113 that are located on both sides of the length compensation portion 1111;

The hinge module 14 includes a storage portion 141 and a motion control portion 142. The storage portion 141 is configured to accommodate the length compensation portion 1111 of the shaft-passing portion 111, and the motion control portion 142 is configured to control the extension and retraction of the length compensation portion 1111 when the electronic device switches between the folded and unfolded states, such that the length changes of the first shaft-passing sub-portion 1112 and the second shaft-passing sub-portion 1113 correspond to each other.

It should be noted that the expression "length changes correspond to each other" means that the length changes of the first shaft-passing sub-portion and the second shaft-passing sub-portion tend to be the same (i.e., when the length of the first shaft-passing sub-portion increases, the length of the second shaft-passing sub-portion also increases; when the length of the first shaft-passing sub-portion decreases, the length of the second shaft-passing sub-portion also decreases), and the amount of length changes are equal or approximately equal. The shaft-passing portion extends in a direction from the first middle frame towards the second middle frame and passes through the hinge module. The hinge module (specifically, the hinge cover) has a shape that matches the first middle frame and the second middle frame, so as to ensure that the first middle frame and the second middle frame fully or partially cover the hinge module when the device is in the unfolded state, and that the first middle frame and the second middle frame may rotate relative to the hinge module when the device is required to switch to the folded state, thereby allowing the device to be folded.

The electronic device provided by the embodiments of the present disclosure may achieve the folding or unfolding through the coordinated movement of the hinge module, the first middle frame, and the second middle frame, thereby realizing a foldable function. The flexible circuit board is provided with the shaft-passing portion that passes through the hinge module, so as to connect the parts of the circuit board located on the first middle frame side and the second middle frame side, thus achieving an integrated circuit board. The shaft-passing portion includes the length compensation portion, the first shaft-passing sub-portion and the second shaft-passing sub-portion that are located on both sides of the length compensation portion. The length compensation portion may be stored in the storage portion of the hinge module, ensuring that another component, such as the screen, is not pressed by the circuit board when the electronic device is in the unfolded state. The hinge module further includes a motion control portion, which may control the extension and retraction of the length compensation portion such that the lengths of the first shaft-passing sub-portion and the second shaft-passing sub-portion are compensated during the folding process, thereby ensuring that the shaft-passing portion may be more stably connected with the parts of the circuit board on the first middle frame side and the second middle frame side. With the help of the motion control portion, it is ensured that the length changes of the first and second shaft-passing sub-portions correspond to each other, preventing the length of the shaft-passing sub-portion on a certain side from becoming too large, thus avoiding excessive accumulation of the circuit board on a certain side when the device is restored to the unfolded state, preventing the screen from being pushed up. Moreover, it also prevents a scenario where a relatively short length of the shaft-passing sub-portion on a certain side leads to excessive pulling of the circuit board and causes the circuit board to break.

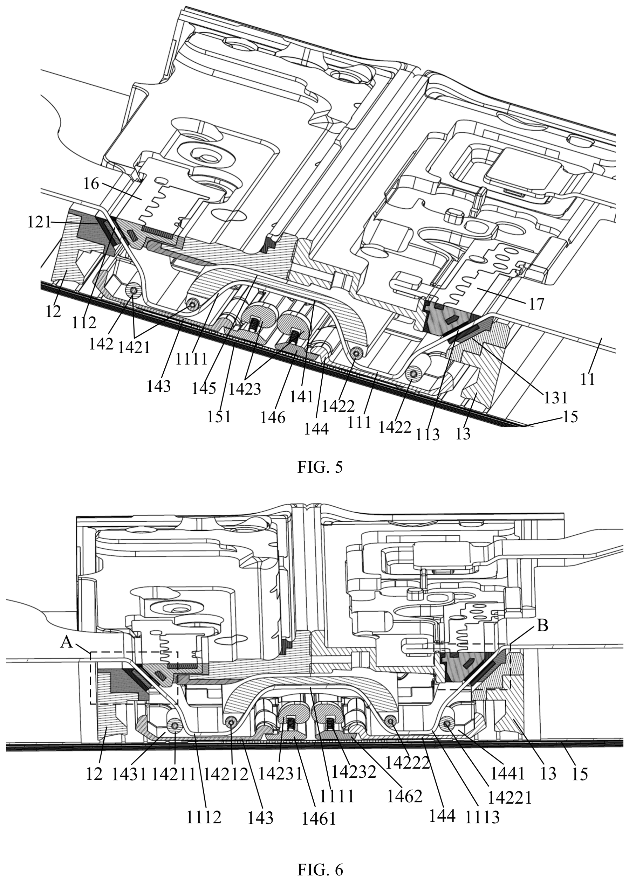

In some embodiments, with reference to FIG. 5, the motion control portion 142 includes a first motion control assembly 1421 and a second motion control assembly 1422 located on both sides of the storage portion 141;

the first motion control assembly 1421 is configured to control the extension and retraction of the length compensation portion 1111 such that a length of the first shaft-passing sub-portion 1112 changes;

the second motion control assembly 1422 is configured to control the extension and retraction of the length compensation portion 1111 such that a length of the second shaft-passing sub-portion 1113 changes.

In this embodiment, the two motion control assemblies located on both sides of the storage portion are used to respectively regulate the length changes of the first and second shaft-passing sub-portions, so as to ensure the correspondence of the length changes of the first and second shaft-passing sub-portions, thereby more effectively preventing the screen from being pushed up or the circuit board from being torn.

Optionally, with reference to FIG. 5, the first motion control assembly 1421 and the second motion control assembly 1422 are symmetrically arranged relative to the storage portion 141. This further balances the adjustment effects of the two motion control assemblies, thereby improving the correspondence of the length changes of the first shaft-passing sub-portion and the second shaft-passing sub-portion.

In some embodiments, with reference to FIG. 5, the first motion control assembly 1421 and the second motion control assembly 1422 respectively support the shaft-passing portion 111 in a rolling manner. In this embodiment, the shaft-passing portion is rollingly supported, such that the length compensation portion of the shaft-passing portion will not be damaged due to wear during relative extension and retraction, thus ensuring the functionality of the flexible circuit board.

Optionally, with reference to FIGS. 5-6, the first motion control assembly 1421 includes a first rolling support member 14211, the second motion control assembly 1422 includes a second rolling support member 14221, and the first rolling support member 14211 and the second rolling support member 14221 respectively support the shaft-passing portion 111 in a rolling manner.

In this embodiment, the rolling support members are used to achieve rolling support for the shaft-passing portion. During the relative extension and retraction of the length compensation portion of the shaft-passing portion, the main interaction between the rolling support members and the shaft-passing portion is rolling friction. As a result, the rolling support members do not obstruct the extension and retraction of the length compensation portion, and the rolling support members may ensure that the speed of extension and retraction is slow and the amount of extension and retraction towards both sides is relatively balanced, and thus, the shaft-passing portion does not cause the screen to be pushed up due to excessive accumulation on one side or be torn due to being suddenly pulled on one side. In other words, with the use of a low-cost and relatively simple structural improvement, the reliable motion control is achieved.

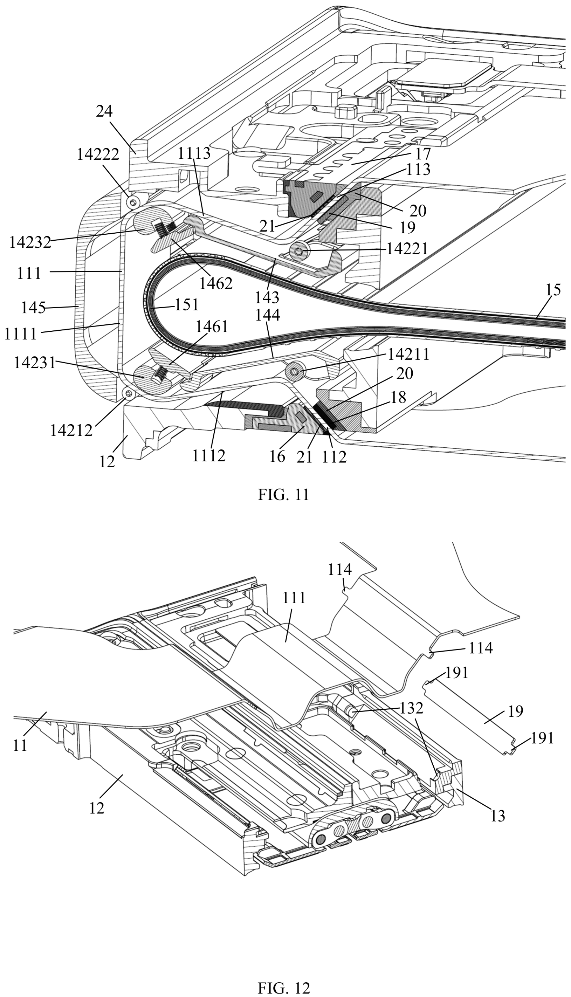

Optionally, with reference to FIGS. 5 and 11, the electronic device includes a screen 15, and the screen 15 includes a foldable portion 151;
the hinge module 14 includes a first floating plate structure 143 and a second floating plate structure 144, and the first floating plate structure 143 and the second floating plate structure 144 are configured to jointly support the foldable portion 151;
the first rolling support member 14211 and the second rolling support member 14221 are respectively mounted on the first floating plate structure 143 and the second floating plate structure 144.

In this embodiment, the first floating plate structure and the second floating plate structure may move relative to each other, either moving towards each other or moving away from each other during the folding or unfolding process of the electronic device, thereby adapting to the bending form of the foldable portion of the screen. The two floating plate structures may also be considered as moving along with the two middle frames. By mounting the first rolling support member and the second rolling support member on the first floating plate structure and the second floating plate structure, respectively, it is advantageous for the first and second rolling support members to adaptively change their own positions during the folding or unfolding process of the electronic device, thereby constantly maintaining rolling contact with the first shaft-passing sub-portion and the second shaft-passing sub-portion of the shaft-passing portion, and ensuring effective length control of the first shaft-passing sub-portion and the second shaft-passing sub-portion.

Optionally, with reference to FIG. 6, the first floating plate structure 143 and the second floating plate structure 144 each have a first mounting position 1431 and a second mounting position 1441, and the first rolling support member 14211 and the second rolling support member 14221 are respectively mounted on the first floating plate structure 143 and the second floating plate structure 144 by means of the first mounting position 1431 and the second mounting position 1441.

The mounting positions are respectively formed on the first floating plate structure and the second floating plate structure to mount the first rolling support member and the second rolling support member, it is advantageous to fully utilize the internal space of the hinge module, reduce the volume of the hinge module, and thus facilitate the realization of the invisibility of the hinge module. Optionally, the first mounting position and the second mounting position are groove structures.

Optionally, with reference to FIG. 6, one or both of the first rolling support member 14211 and the second rolling support member 14221 are a pulley structure or a roller structure. The pulley or roller structure here may be mounted by means of a pin or a shaft in the first mounting position or the second mounting position (when using the pin, the pins are provided on both side of the rolling support member in each mounting position), to ensure they are not easily detached. By using the pulley or roller structure to implement the rolling support member, the reliable motion control may be achieved with a simple structure and lower cost.

Optionally, there are a plurality of first mounting positions and/or a plurality of second mounting positions, and there are a plurality of first rolling support members and/or a plurality of second rolling support members. The plurality of first rolling support members correspond one-to-one with the plurality of first mounting positions, and the plurality of second rolling support members correspond one-to-one with the plurality of second mounting positions. Thus, it may achieve a better motion control effect.

In some embodiments, with reference to FIG. 6, the first motion control assembly 1421 further includes a third rolling support member 14212, and the second motion control assembly 1422 further includes a fourth rolling support member 14222;
the third rolling support member 14212 and the fourth rolling support member 14222 respectively support the shaft-passing portion 111 in a rolling manner;
the third rolling support member 14212 and the fourth rolling support member 14222 are located on a first side of the shaft-passing portion 111, and the first rolling support member 14211 and the second rolling support member 14221 are located on a second side of the shaft-passing portion 111. The first side and the second side are the two opposite sides of the shaft-passing portion 111.

When the shaft-passing portion is rollingly supported by a single side, the shaft-passing portion is actually pushed up by the rolling support member, which may cause the shaft-passing portion to deviate in the direction away from the rolling support member. In this case, the motion speed of the shaft-passing portion may be too fast, leading to accumulation. In this embodiment, the rolling support members are provided on both sides of the shaft-passing portion, which may reduce the probability of the shaft-passing portion deviating from the set motion direction during operation, ensuring better motion control of the shaft-passing portion. The first shaft-passing sub-portion and the second shaft-passing sub-portion are less likely to accumulate within a short period of time. Through the rolling support of the rolling support members on both sides, the motion deformation process of the shaft-passing portion is smoother, and the changes on both sides are more balanced, so as to reduce the likelihood of breakage.

Optionally, with reference to FIG. 6, the third rolling support member 14212 and the fourth rolling support member 14222 are arranged in a staggered manner relative to the first rolling support member 14211 and the second rolling support member 14221, respectively.

That is, the third rolling support member and the first rolling support member respectively rollingly support different positions of the first shaft-passing sub-portion, and the fourth rolling support member and the second rolling support member respectively rollingly support different positions of the second shaft-passing sub-portion. In this way, first, it avoids the rolling support members being arranged on both sides of a single position of the shaft-passing portion, thereby preventing the electronic device from experiencing difficulty in folding or unfolding due to a slow motion speed of the shaft-passing portion; second, it avoids both sides of the shaft-passing portion simultaneously bearing the rolling friction, thereby reducing the probability of wear on the shaft-passing portion; third, the staggered arrangement design ensures that the first shaft-passing sub-portion and the second shaft-passing sub-portion maintain a generally extended state, making it less likely for accumulation to occur and avoiding breakage caused by excessive folding.

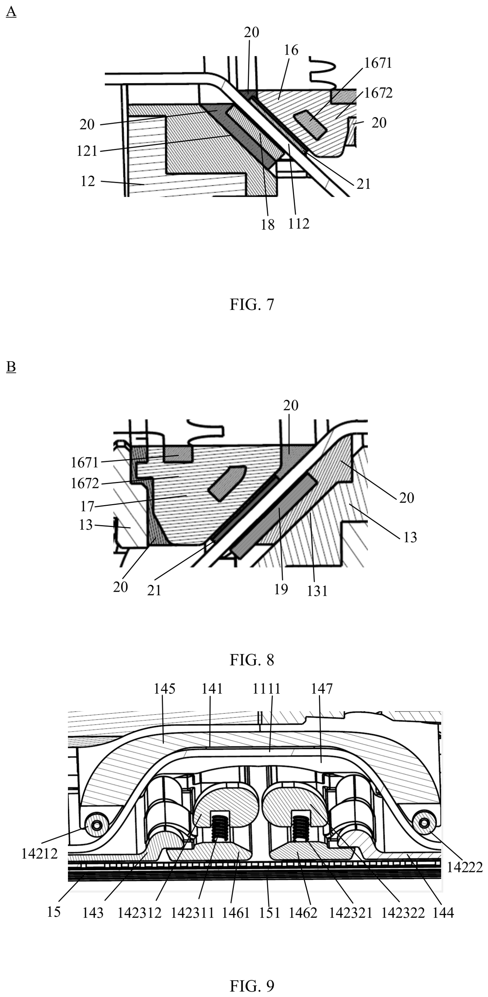

In some embodiments, with reference to FIG. 9, the hinge module 14 includes a hinge cover 145 and a hinge shaft 147, and the hinge cover 145 encloses the hinge shaft 147;
the third rolling support member 14212 and the fourth rolling support member 14222 are respectively mounted on a first side edge and a second side edge of the hinge cover 145, where the first side edge is a side edge of the hinge cover 145 closer to the first middle frame 12, and the second side edge is a side edge of the hinge cover 145 closer to the second middle frame 13.

Since when the shaft-passing portion passes through the hinge module, the shaft-passing portion inevitably needs to pass through the hinge cover, and in this embodiment, by respectively mounting the third rolling support member and the fourth rolling support member on the first side edge and the second side edge of the hinge cover, it may effectively avoid wear caused by relative friction between the shaft-passing portion and the hinge cover, thus improving the service life of the flexible circuit board.

Optionally, with reference to FIG. 9, one or both of the third rolling support member 14212 and the fourth rolling support member 14222 are a roller structure or a pulley structure. By using rollers or pulleys to implement the third rolling support member and the fourth rolling support member, the reliable motion control may be achieved with a simple structure and lower cost.

Optionally, the two side edges of the hinge cover 145 may each be provided with a recessed mounting position for mounting the third rolling support member 14212 and the fourth rolling support member 14222. This may further improve the space utilization efficiency of the hinge module, facilitate the realization of a compact hinge module, and thus help achieve the invisibility of the hinge.

Specifically, each mounting position on the two side edges of the hinge cover 145 may be provided with a pin or shaft (when using pins, the pins are generally arranged on both side of the rolling support member) to achieve the installation of the rolling support member.

Optionally, there may be one or a plurality of third rolling support members 14212; there may be one or a plurality of fourth rolling support members 14222; and the third rolling support members 14212 and the fourth rolling support members 14222 are arranged in a one-to-one correspondence. This may improve the control effect of the motion control portion on the extension and retraction of the length compensation portion.

In some embodiments, with reference to FIG. 9, the storage portion 141 is formed on a side of the hinge cover 145 close to the screen 15.

Since the hinge cover is generally arranged opposite to the foldable portion of the screen, it may be approximately regarded as a rotational center of the two middle frames during the folding process. Taking the center of the swivel cover as a reference, the length changes of the first shaft-passing sub-portion and the second shaft-passing sub-portion should be equal. In this embodiment, the storage portion is formed on the side of the hinge cover closer to the screen, to store the length compensation portion, so as to ensure that the compensation amounts of the length compensation portion for the first shaft-passing sub-portion and the second shaft-passing sub-portion to be more balanced, and also facilitate the smoother return of the remaining length of the shaft-passing sub-portions on both sides to the storage portion after the electronic device switches back to the unfolded state, preventing accumulation outside the storage portion.

Optionally, with reference to FIGS. 9 and 11, a side surface of the hinge cover 145 close to the screen 15 is an arcuate surface symmetrical with respect to a folding line of the electronic device, with the arcuate surface recessed in a direction away from the screen 15. The folding line of the electronic device refers to a line along which the screen 15 remains immovable during the folding process of the electronic device, and the hinge cover 145 forms the storage portion 141 through the arcuate surface.

In this embodiment, by using the arcuate surface to form the storage portion, it is advantageous to increase the storage capacity of the storage portion, ensuring that the design margin of the shaft-passing portion does not need to be excessively folded even in the stored state. The arcuate surface is set to be symmetrical with respect to the folding line of the electronic device, which helps ensure that the remaining lengths of the shaft-passing sub-portions on both sides may slide into the storage portion at a more even speed, and is less likely to cause accumulation on a single side.

In some embodiments, with reference to FIG. 5, the motion control portion 142 further includes a floating support assembly 1423, which is configured to floatably support the shaft-passing portion 111 when the electronic device switches between the folded and unfolded states.

In this embodiment, by setting the floating support assembly, the shaft-passing portion may be floatably supported, to provide a floating supporting force to the shaft-passing portion during the movement of the shaft-passing portion. That is, the floating support assembly may follow the up-and-down movement of the shaft-passing portion during its motion. When the remaining length of the shaft-passing portion is large, the floating support assembly supports at a high height; when the remaining length of the shaft-passing portion is short, t the floating support assembly supports at a low height. In this way, the shaft-passing portion may always remain in an extended state and is less likely to be folded, effectively avoiding excessive redundancy. Moreover, the length of the shaft-passing portion may always ensure stable connection with the circuit board on both sides of the middle frames, avoiding too short a length, thus effectively preventing insufficient redundancy.

In some embodiments, with reference to FIG. 5, the hinge module 14 further includes a middle support assembly 146, which is located on a side of the length compensation portion 1111 of the shaft-passing portion 111 away from the hinge cover 145. The middle support assembly 146 supports the foldable portion 151 of the screen 15; the floating support assembly 1423 is mounted on the middle support assembly 146.

In this embodiment, the middle support assembly is actually used to support the middle position of the foldable portion of the screen and may be located between the two floating structures. The length compensation portion of the shaft-passing portion, which is located between the two shaft-passing sub-portions, is arranged opposite the middle support assembly. Since the length compensation portion includes the design redundancy of the shaft-passing portion, it is more likely to be folded. The floating support assembly is mounted on the middle support assembly, which helps avoid the folding of the length compensation portion of the shaft-passing portion. Additionally, during the folding process of the electronic device, the floating support assembly may timely floatably support the length compensation portion to prevent the length compensation portion from extending or retracting too quickly, ensuring that the compensation amounts of the length compensation portion for the shaft-passing sub-portions on both sides are more balanced.

Optionally, with reference to FIG. 6, the middle support assembly 146 includes a first middle support member 1461 and a second middle support member 1462, where the first middle support member 1461 and the second middle support member 1462 move towards or away from each other when the electronic device switches between the folded and unfolded states;

The floating support assembly 1423 includes a first floating support structure 14231 and a second floating support structure 14232, where the first floating support structure 14231 and the second floating support structure 14232 are respectively mounted on the first middle support member 1461 and the second middle support member 1462.

In this embodiment, the two middle support members may accordingly move towards or away from each other in accordance with the folding or unfolding of the electronic device, to respectively support the opposite folding parts of the foldable portion of the screen. The floating support structures are provided on the two middle support members, which further helps ensure the compensation amounts of the length compensation portion for the shaft-passing sub-portions on both sides to be more balanced.

Optionally, with reference to FIG. 11, the first floating support structure 14231 and the second floating support structure 14232 are both elastic telescopic structures. Thus, it may ensure that the floating support structures provide effectively support to the length compensation portion when the redundancy of the shaft-passing portion is relatively large, and ensure timely retraction of the floating support structures when the redundancy of the shaft-passing portion is relatively insufficient, avoiding excessive pressure on the shaft-passing portion. Furthermore, the elastic telescopic structure may switch between the extended and retracted states with high frequency and for long periods, which improves the service life of the electronic device.

Optionally, there may be one or a plurality of the first floating support structures 14231, and there may be one or a plurality of second floating support structures 14232. The first floating support structure 14231 and the second floating support structure 14232 are arranged in a one-to-one correspondence. In this way, while improving the floating support effect, the correspondence of the length changes of the shaft-passing sub-portions on both sides may be ensured.

Optionally, with reference to FIG. 9, the first floating support structure 14231 includes a first elastic member 142311 and a first telescopic member 142312, where the first elastic member 142311 is supported between the first telescopic member 142312 and the first middle support member 1461. The first telescopic member 142312 is biased by the first elastic member 142311 to elastically support the shaft-passing portion 111 during the folding process of the electronic device; and/or,
the second floating support structure 14232 includes a second elastic member 142321 and a second telescopic member 142322, where the second elastic member 142321 is supported between the second telescopic member 142322 and the second middle support member 1462. The second telescopic member 142322 is biased by the second elastic member 142321 to elastically support the shaft-passing portion 111 during the folding process of the electronic device.

The above embodiment provides a specific implementation of the floating support structure. This implementation ensures the reliability of the floating support through a simple structure.

Optionally, the first middle support member 1461 and the first telescopic member 142312 each are provided with a corresponding mounting hole or a mounting post, to enable the installation of the first elastic member 142311; and the second middle support member 1462 and the second telescopic member 142322 each are provided with a corresponding mounting hole or a mounting post, to enable the installation of the second elastic member 142321.

Optionally, surfaces of the first telescopic member 142312 and the second telescopic member 142322 close to the shaft-passing portion 111 are smooth curved surfaces. This may reduce wear caused by friction on the length compensation portion.

Optionally, a size of a side of the first telescopic member 142312 that is away from the second telescopic member 142322 is less than a size of a side of the first telescopic member 142312 close to the second telescopic member 142322. Similarly, a size of a side of the second telescopic member 142322 away from the first telescopic member 142312 is less than a size of a side of the second telescopic member 142322 close to the first telescopic member 142312. This ensures that the overall support area of the two telescopic members is relatively large while ensuring that the space occupied by the two telescopic members is relatively small, which is conducive to achieving a small volume of the hinge module. In addition, it may ensure that the extension and retraction of the length compensation portion toward the two shaft-passing sub-portions on two sides are smoother.

Optionally, with reference to FIG. 9, one or a plurality of the first elastic member 142311 and the second elastic member 142321 include a spring. The spring is used to implement the elastic member, which is cost-effective and has high durability.

Those skilled in the art may also come up with different or similar alternative implementations based on the present disclosure (such as directly using the elastic member with better elastic property to act as the floating support structure). The present disclosure will not elaborate further on this.

In some embodiments, with reference to FIG. 5, the first middle frame 12 and the second middle frame 13 each are defined with a first perforation 121 and a second perforation 131, respectively;
the flexible circuit board 11 is provided with a first perforation portion 112 and a second perforation portion 113 located on both sides of the shaft-passing portion 111. The first perforation portion 112 is at least partially fixedly mounted in the first perforation 121, and the second perforation portion 113 is at least partially fixedly mounted in the second perforation 131.

In this embodiment, the first perforation portion and the second perforation portion are fixedly mounted in the first perforation and the second perforation respectively, so as to ensure the redundancy set for the flexible circuit board to be always maintained between the two middle frames, thereby ensuring that the actual length of the shaft-passing portion is the same as the design length, and that the design redundancy of the shaft-passing portion is equal to the actual redundancy of the shaft-passing portion, and further ensuring a longer bending service life for the electronic device.

Optionally, with reference to FIG. 5, the electronic device further includes a first positioning support 16 and a second positioning support 17. The first positioning support 16 and the second positioning support 17 are respectively filled into the first perforation 121 and the second perforation 131 to fix the first perforation portion 112 and the second perforation portion 113.

In this embodiment, the first positioning support may help improve the installation firmness of the first perforation portion relative to the first middle frame, and the second positioning support may help improve the mounting firmness of the second perforation portion relative to the second middle frame.

Optionally, one or both ends of the first positioning support 16 and one or both ends of the second positioning support 17 may be locked and connected to the first middle frame and the second middle frame by a screw, etc., respectively, which further improves the positioning and mounting firmness of the first perforation portion and the second perforation portion.

Optionally, with reference to FIGS. 7 and 8, one or both of the first positioning support 16 and the second positioning support 17 are a matching structure of a metal structure 1671 and a non-metal structure 1672, where the metal structure 1671 is embedded in the non-metal structure 1672.

Based on the above arrangement, the metal structure may be used to ensure the overall strength of the positioning support is relatively high, while the non-metal structure is used to ensure the adaptability of the positioning support to the shape of the perforation location. The metal structure here may be made of steel, aluminum, iron, etc., and the non-metal structure may be made of rubber, plastic, etc.

Optionally, with reference to FIGS. 7 and 8, the electronic device further includes a first positioning metal member 18 and a second positioning metal member 19;
the first positioning metal member 18 and the second positioning metal member 19 are respectively fixedly connected to the first perforation portion 112 and the second perforation portion 113, and are respectively positioned and mounted on the first middle frame 12 and the second middle frame 13.

Since the shaft-passing portion is flexible and has relatively low strength, it is prone to breakage at the fixed mounting position due to excessive pulling force. The shaft-passing portion has a thin thickness, which is difficult to achieve precise positioning and mounting. In this embodiment, the first positioning metal member and the second positioning metal member are provided for the first perforation portion and the second perforation portion, respectively. On one hand, the cooperation between the positioning metal members and the perforation portions may enhance the overall structural strength of the perforation portions, reducing the risk of breakage of the perforation portions caused by pulling. On the other hand, the positioning metal members and the perforation portions may be positioned and mounted together, improving the positioning and mounting accuracy of the perforation portions.

Optionally, an adhesive layer is provided between the first positioning metal member 18 and the first perforation portion 112 to improve the mounting firmness between the two; similarly, an adhesive layer is provided between the second positioning metal member 19 and the second perforation portion 113 to improve the mounting firmness between the two.

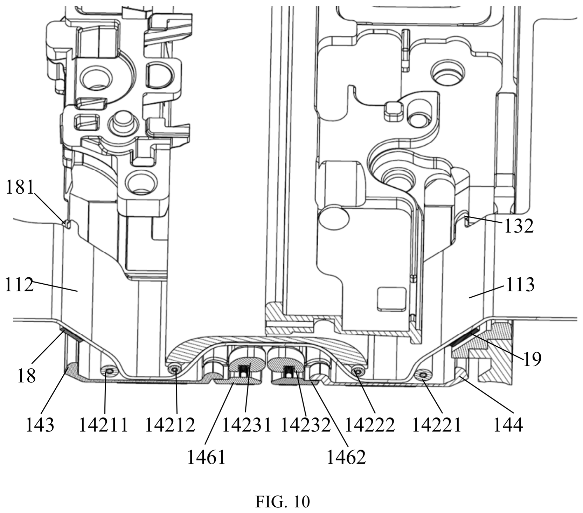

Optionally, with reference to FIGS. 10, 12, and 13, the first middle frame 12 is defined with a first mounting groove 122, the first positioning metal member 18 is provided with a first protrusion portion 181, and the first protrusion portion 181 is located in the first mounting groove 122; and/or, the second middle frame 13 is defined with a second mounting groove 132, the second positioning metal member 19 is provided with a second protrusion portion 191, and the second protrusion portion 191 is located in the second mounting groove 132.

In this embodiment, the precise positioning and mounting of the positioning metal members and the perforation portions with the middle frames are achieved through the fit between the mounting grooves on the middle frames and the protrusion portions of the positioning metal members, which ensures the actual redundancy of the shaft-passing portion to be equal to the design redundancy and maintains the redundancy of the shaft-passing portion stable over time.

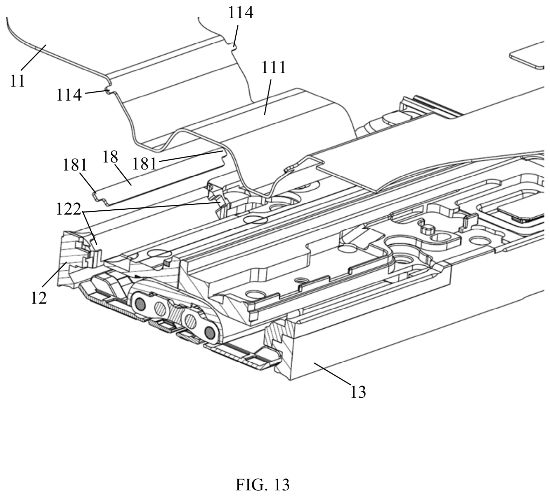

Optionally, with reference to FIGS. 12 and 13, the first perforation portion 112 and the second perforation portion 113 each have a circuit board protrusion portion 114, where the circuit board protrusion portion 114 of the first perforation portion 112 is located in the first mounting groove 122, and the circuit board protrusion portion 114 of the second perforation portion 113 is located in the second mounting groove 132. This may further improve the positioning and mounting accuracy of the shaft-passing portion.

Optionally, there are one or a plurality of first mounting grooves 122 and/or second mounting grooves 132, and there are one or a plurality of first protrusion portions 181 and/or the second protrusion portions. The one or the plurality of first mounting grooves 122 and the one or the plurality of first protrusion portions 181 are arranged in a one-to-one correspondence, and the one or the plurality of second mounting grooves 132 and the one or the plurality of second protrusion portions 191 are arranged in a one-to-one correspondence. The circuit board protrusion portion 114 of the first perforation portion 112 may be arranged to correspond one-to-one with the first protrusion portion 181, and the circuit board protrusion portion 114 of the second perforation portion 113 may be arranged to correspond one-to-one with the second protrusion portion 191.

Optionally, with reference to FIGS. 7 and 8, the electronic device further includes a plurality of sealing layers 20, where the plurality of sealing layers 20 include:
a sealing layer 20 filling a gap between the first positioning metal member 18 and a wall surface of the first perforation 121;
a sealing layer 20 filling a gap between the second positioning metal member 19 and the wall surface of the second perforation 131;
a sealing layer 20 filling a gap between the first perforation portion 112 and the first positioning support 16;
a sealing layer 20 filling a gap between the second perforation portion 113 and the second positioning support 17;
a sealing layer 20 filling a gap between the first positioning support 16 and a wall surface of the first perforation 121, and/or,
a sealing layer 20 filling a gap between the second positioning support 17 and a wall surface of the second perforation 131.

By using one or the plurality of the above sealing layers, it is possible to ensure the sealing at positions of the first perforation and second perforation, thereby preventing water or moisture from entering the hinge module through the perforations, and further ensuring the service life of the hinge module and meeting the IPX8 waterproof requirement of the electronic device.

Optionally, one or the plurality of the sealing layers 20 are formed by solidifying liquid hot melt adhesive. This may fully ensure that each gap that needs to be sealed at the perforations of the middle frame is completely filled with the sealing material, thereby ensuring good sealing performance.

Optionally, with reference to FIGS. 7 and 8, the electronic device further includes one or a plurality of elastic support layers 21, where one or more elastic support layers 21 include an elastic support layer 21 filled between the first positioning support 16 and the first perforation portion 112, and/or an elastic support layer 21 filled between the second positioning support 17 and the second perforation portion 113.

By providing the above elastic layers, the elastic layer may press against the first perforation portion or the second perforation portion to prevent the first perforation portion and the second perforation portion from shifting. The elastic layer may be elastically compressed, thus adapting to the shape of the circuit board under different assembly conditions, achieving an elastic pressing surface that is consistent with the shape of the circuit board, and ensuring the proper fixation of the circuit board.

Optionally, the above elastic support layers may be set before the formation of the sealing layer, such that the sealing layer may be formed in the gap between the elastic support layer and other components, further ensuring the waterproof performance of the device. The elastic support layer may support the sealing material, preventing the sealing material from entering the inside of the hinge module through the gap between the circuit board and the middle frame, which could affect the operation of the hinge module.

Optionally, one or more of the above elastic support layers 21 are made of foam, rubber, or silicone material. In this way, the elastic support layers may also have sealing properties, further improving the waterproof performance of the device.

In summary, the embodiments of the present disclosure provide an electronic device, in the electronic device, the motion control unit may ensure that the shaft-passing portion always remains in the extended state during the unfolding and folding process, preventing the shaft-passing portion from being folded, and it may also ensure that the length compensation portion of the shaft-passing portion does not undergo rapid extension and retraction, thereby avoiding the scenario where the shaft-passing portion experiences dead folds or excessive pulling forces that could cause breakage, and additionally, it ensures that the length changes of the first and second shaft-passing sub-portions are equal or approximately equal, preventing issues such as an uneven screen appearance or screen failure caused by excessive accumulation of the shaft-passing portion on one side of the screen. Moreover, the floating support structure may provide floating support for the shaft-passing portion during redundancy changes of the shaft-passing portion, preventing the shaft-passing portion from being folded due to excess redundancy or being torn due to insufficient redundancy, and the like. During the movement and deformation process of the shaft-passing portion, the rolling friction is formed between the shaft-passing portion and the hinge cover by means of the rolling support member, avoiding direct scraping between them and reducing the probability of damage to the circuit board. Furthermore, the accurate positioning mounting of the shaft-passing portion is achieved through structures such as the positioning supports and the positioning metal members, preventing the shaft-passing portion from shifting between the two middle frames. Furthermore, the sealing at the perforation on the middle frame is also achieved through structures like the sealing layers and the elastic support layers, meeting the IPX8 waterproof requirement of the device.

In the present disclosure, the terms "first" and "second" are used solely for descriptive purposes and should not be understood as indicating or implying relative importance. The term "a plurality of" refers to two or more, unless specifically limited otherwise.

Those skilled in the art, after considering the specification and practicing the present disclosure hereof, will easily conceive other embodiments of the present disclosure. The present disclosure is intended to cover any modifications, uses, or adaptations that follow the general principles of the present disclosure and include known common knowledge or conventional technical means in the art that were not explicitly disclosed. The specification and examples are intended to be illustrative.

It should be understood that the present disclosure is not limited to the exact structure described above and shown in the accompanying drawings, and various modifications and changes may be made without departing from the scope thereof. The scope of the disclosure is defined solely by the appended claims.

## Claims

1. An electronic device, comprising: a flexible circuit board (11), a first middle frame (12), a second middle frame (13), and a hinge module (14);
wherein the first middle frame (12) and the second middle frame (13) are respectively connected to two opposite sides of the hinge module (14); and the hinge module (14), the first middle frame (12), and the second middle frame (13) are cooperatively movable to enable the electronic device to be folded or unfolded;
the flexible circuit board (11) is provided with a shaft-passing portion (111) passing through the hinge module (14) between the first middle frame (12) and the second middle frame (13), the shaft-passing portion (111) comprises a length compensation portion (1111), a first shaft-passing sub-portion (1112) and a second shaft-passing sub-portion (1113), wherein the first shaft-passing sub-portion (1112) and the second shaft-passing sub-portion (1113) are located on two sides of the length compensation portion (1111);
the hinge module (14) comprises a storage portion (141) and a motion control portion (142), wherein the storage portion (141) is configured to accommodate the length compensation portion (1111) of the shaft-passing portion (111), and the motion control portion (142) is configured to control extension and retraction of the length compensation portion (1111) when the electronic device switches between a folded state and an unfolded state, such that length changes of the first shaft-passing sub-portion (1112) and the second shaft-passing sub-portion (1113) correspond to each other.

2. The electronic device according to claim 1, wherein the motion control portion (142) comprises a first motion control assembly (1421) and a second motion control assembly (1422) located on two sides of the storage portion (141);
the first motion control assembly (1421) is configured to control the extension and retraction of the length compensation portion (1111) such that a length of the first shaft-passing sub-portion (1112) changes;
the second motion control assembly (1422) is configured to control the extension and retraction of the length compensation portion (1111) such that a length of the second shaft-passing sub-portion (1113) changes.

3. The electronic device according to claim 2, wherein the first motion control assembly (1421) and the second motion control assembly (1422) are symmetrically arranged relative to the storage portion (141).

4. The electronic device according to claim 2, wherein the first motion control assembly (1421) and the second motion control assembly (1422) respectively support the shaft-passing portion (111) in a rolling manner.

5. The electronic device according to claim 4, wherein the first motion control assembly (1421) comprises a first rolling support member (14211), the second motion control assembly (1422) comprises a second rolling support member (14221), and the first rolling support member (14211) and the second rolling support member (14221) respectively support the shaft-passing portion (111) in a rolling manner.

6. The electronic device according to claim 5, comprising a screen (15), wherein the screen (15) comprises a foldable portion (151);
the hinge module (14) comprises a first floating plate structure (143) and a second floating plate structure (144), the first floating plate structure (143) and the second floating plate structure (144) are configured to jointly support the foldable portion (151);
the first rolling support member (14211) and the second rolling support member (14221) are respectively mounted on the first floating plate structure (143) and the second floating plate structure (144);
and optionally, wherein the first floating plate structure (143) and the second floating plate structure (144) respectively are provided with a first mounting position (1431) and a second mounting position (1441), and the first rolling support member (14211) and the second rolling support member (14221) are respectively mounted on the first floating plate structure (143) and the second floating plate structure (144) by means of the first mounting position (1431) and the second mounting position (1441);
and further optionally, wherein one or both of the first rolling support member (14211) and the second rolling support member (14221) are a pulley structure or a roller structure.

7. The electronic device according to claim 5, wherein the first motion control assembly (1421) further comprises a third rolling support member (14212), and the second motion control assembly (1422) further comprises a fourth rolling support member (14222);
the third rolling support member (14212) and the fourth rolling support member (14222) respectively support the shaft-passing portion (111) in a rolling manner;
the third rolling support member (14212) and the fourth rolling support member (14222) are located on a first side of the shaft-passing portion (111), the first rolling support member (14211) and the second rolling support member (14221) are located on a second side of the shaft-passing portion (111), and the first side and the second side are two opposite sides of the shaft-passing portion (111);
and optionally, wherein the third rolling support member (14212) and the fourth rolling support member (14222) are respectively arranged in a staggered manner with the first rolling support member (14211) and the second rolling support member (14221).

8. The electronic device according to claim 7, wherein the hinge module (14) comprises a hinge cover (145) and a hinge shaft (147), the hinge cover (145) encloses the hinge shaft (147);
the third rolling support member (14212) and the fourth rolling support member (14222) are respectively mounted on a first side edge and a second side edge of the hinge cover (145), the first side edge is a side edge of the hinge cover (145) closer to the first middle frame (12), and the second side edge is a side edge of the hinge cover (145) closer to the second middle frame (13);
and optionally, wherein one or both of the third rolling support member (14212) and the fourth rolling support member (14222) are a roller structure or a pulley structure.

9. The electronic device according to any one of claims 1-8, wherein the hinge module (14) comprises a hinge cover (145) and a hinge shaft (147), the hinge cover (145) encloses the hinge shaft (147); the electronic device further comprises a screen (15);
the storage portion (141) is formed on a side of the hinge cover (145) close to the screen (15).

10. The electronic device according to claim 9, wherein a side surface of the hinge cover (145) close to the screen (15) is an arcuate surface symmetrical with respect to a folding line of the electronic device, the arcuate surface is recessed in a direction away from the screen (15), the folding line of the electronic device is a line along which the screen (15) remains immovable during a folding process of the electronic device, and the hinge cover (145) forms the storage portion (141) through the arcuate surface.

11. The electronic device according to claim 9, wherein the motion control portion (142) further comprises a floating support assembly (1423), the floating support assembly (1423) is configured to floatably support the shaft-passing portion (111) when the electronic device switches between the folded state and the unfolded state;
wherein the hinge module (14) further comprises a middle support assembly (146), the middle support assembly (146) is located on a side of the length compensation portion (1111) of the shaft-passing portion (111) away from the hinge cover (145), the middle support assembly (146) supports a foldable portion (151) of the screen (15);
the floating support assembly (1423) is mounted on the middle support assembly (146);
wherein the middle support assembly (146) comprises a first middle support member (1461) and a second middle support member (1462), the first middle support member (1461) and the second middle support member (1462) move towards each other or move away from each other when the electronic device switches between the folded state and the unfolded state;
the floating support assembly (1423) comprises a first floating support structure (14231) and a second floating support structure (14232), the first floating support structure (14231) and the second floating support structure (14232) are respectively mounted on the first middle support member (1461) and the second middle support member (1462).

12. The electronic device according to claim 11, wherein the first floating support structure (14231) and the second floating support structure (14232) are both elastic telescopic structures;
and optionally wherein the first floating support structure (14231) comprises a first elastic member (142311) and a first telescopic member (142312), the first elastic member (142311) is supported between the first telescopic member (142312) and the first middle support member (1461), the first telescopic member (142312) is biased by the first elastic member (142311) to elastically support the shaft-passing portion (111) during a folding process of the electronic device; and/or,
the second floating support structure (14232) comprises a second elastic member (142321) and a second telescopic member (142322), the second elastic member (142321) is supported between the second telescopic member (142322) and the second middle support member (1462), the second telescopic member (142322) is biased by the second elastic member (142321) to elastically support the shaft-passing portion (111) during a folding process of the electronic device;
and optionally wherein one or a plurality of the first elastic member (142311) and the second elastic member (142321) comprise a spring.

13. The electronic device according to any one of claims 1-8 and 10-12, wherein the first middle frame (12) and the second middle frame (13) are defined with a first perforation (121) and a second perforation (131), respectively;
the flexible circuit board (11) is provided with a first perforation portion (112) and a second perforation portion (113) located on two sides of the shaft-passing portion (111), the first perforation portion (112) is at least partially fixedly mounted in the first perforation (121), and the second perforation portion (113) is at least partially fixedly mounted in the second perforation (131).

14. The electronic device according to claim 13, further comprising: a first positioning support (16) and a second positioning support (17), wherein the first positioning support (16) and the second positioning support (17) are respectively filled in the first perforation (121) and the second perforation (131) to respectively fix the first perforation portion (112) and the second perforation portion (113);
and optionally, wherein one or both of the first positioning support (16) and the second positioning support (17) are a matching structure, the matching structure comprises a metal structure (1671) and a non-metal structure (1672), and the metal structure (1671) is embedded in the non-metal structure (1672).

15. The electronic device according to claim 14, further comprising a first positioning metal member (18) and a second positioning metal member (19);
wherein the first positioning metal member (18) and the second positioning metal member (19) are respectively fixedly connected to the first perforation portion (112) and the second perforation portion (113), and are respectively positioned and mounted on the first middle frame (12) and the second middle frame (13);
and optionally wherein the first middle frame (12) is defined with a first mounting groove (122), the first positioning metal member (18) is provided with a first protrusion portion (181), and the first protrusion portion (181) is located in the first mounting groove (122); and/or,
the second middle frame (13) is defined with a second mounting groove (132), the second positioning metal member (19) is provided with a second protrusion portion (191), and the second protrusion portion (191) is located in the second mounting groove (132);
wherein the electronic device further comprises: a plurality of sealing layers (20), wherein the plurality of sealing layers (20) comprises:
a sealing layer (20) filling a gap between the first positioning metal member (18) and a wall surface of the first perforation (121),
a sealing layer (20) filling a gap between the second positioning metal member (19) and a wall surface of the second perforation (131),
a sealing layer (20) filling a gap between the first perforation portion (112) and the first positioning support (16),
a sealing layer (20) filling a gap between the second perforation portion (113) and the second positioning support (17),
a sealing layer (20) filling a gap between the first positioning support (16) and a wall surface of the first perforation (121), and/or,
a sealing layer (20) filling a gap between the second positioning support (17) and a wall surface of the second perforation (131);
and optionally wherein the electronic device further comprises: one or a plurality of elastic support layers (21), wherein the one or the plurality of elastic support layers (21) comprise an elastic support layer (21) filled between the first positioning support (16) and the first perforation portion (112) and/or an elastic support layer (21) filled between the second positioning support (17) and the second perforation portion (113).
